# EUROPÄISCHE PATENTANMELDUNG

(11) **EP 3 879 146 A1**
(43) Veröffentlichungstag der Anmeldung: **15.09.2021**
(21) Anmeldenummer: 21160179.4
(22) Anmeldetag: 02.03.2021
(51) Int. Cl.: F16K 1/36, F16K 1/18, F16K 1/20

(54) **VENTILKLAPPE**

(30) Priorität: 03.03.2020 DE 102020105682
(71) Anmelder: Adams GmbH, 44653 Herne (DE)
(72) Erfinder: Leno, Eugen, 59439 Holzwickede (DE)
(74) Vertreter: Schneiders & Behrendt Bochum

(57) **Zusammenfassung**

Die Erfindung betrifft eine Ventilklappe für ein Klappenventil, mit einer den Durchtrittsquerschnitt des Klappenventils abdeckenden Ventilscheibe (1), die an ihrem äußeren Umfang mit einem Dichtrand (1a) für die Anlage an einem den Durchtrittsquerschnitt des Klappenventils umgebenden Dichtsitz versehen ist und an ihrer Rückseite mit einer Tragvorrichtung (2) versehen ist, die mittels eines oder mehrerer Klappenaugen (3) drehfest an einer die Ventilklappe verschwenkenden Klappenwelle festlegbar ist und lösbar mit der Ventilscheibe (1) verbunden ist. Es ist Aufgabe der Erfindung, die Ventilklappe der genannten Art dahingehend weiterzubilden, dass der Ersatz oder Austausch der Ventilscheibe erheblich vereinfacht wird, ohne die Funktionsfähigkeit der Ventilklappe zu beeinträchtigen. Zur Lösung dieser Aufgabe schlägt die Erfindung vor, dass die Verbindung zwischen der Ventilscheibe (1) und der Tragvorrichtung (2) als Bajonettverschluss ausgebildet ist.

## Beschreibung

Die Erfindung betrifft eine Ventilklappe für ein Klappenventil, mit einer den Durchtrittsquerschnitt des Klappenventils abdeckenden Ventilscheibe, die an ihrem äußeren Umfang mit einem Dichtrand für die Anlage an einem den Durchtrittsquerschnitt des Klappenventils umgebenden Dichtsitz versehen ist und an ihrer Rückseite eine Tragvorrichtung aufweist, die mittels eines oder mehrerer Klappenaugen drehfest an einer die Ventilklappe verschwenkenden Klappenwelle festlegbar ist und lösbar mit der Ventilscheibe verbunden ist.

Ventilklappen der angegebenen Art kommen im Armaturenbau in der Regel dort zum Einsatz, wo der Durchlauf von flüssigen oder gasförmigen Medien abgesperrt, gedrosselt oder geregelt werden muss. Aufgrund der Tatsache, dass diese Ventilklappen im Einsatz ständig mit den durchtretenden Medien in Kontakt kommen, unterliegen sie einem verhältnismäßig großen Verschleiß, insbesondere wenn die durchtretenden Medien korrosiv oder abrasiv wirkende Bestandteile enthalten. Besonders intensiv ist dieser Verschleiß im Bereich des Dichtrandes der Ventilscheibe, sodass ein Bedarf besteht, die Ventilscheibe von Zeit zu Zeit zu ersetzen oder gegen eine Ventilscheibe aus einem besser geeigneten Material auszutauschen.

Ein solcher Ersatz oder Austausch ist besonders kostenintensiv, wenn die Ventilscheibe einstückig mit der die Klappenaugen aufweisenden Tragvorrichtung verbunden ist. Aus diesem Grund ist in der jüngeren Vergangenheit auch versucht worden, die Ventilscheibe lösbar mit der Tragvorrichtung zu verbinden, und zwar mithilfe von Schraubflanschen, die durch Schrauben zusammengehalten werden. Für solche Schraubverbindungen ist insbesondere bei Armaturen mit hoher Druckdifferenz und/oder stark schwankenden Drücken eine verhältnismäßig große Anzahl von Schrauben erforderlich, um den auftretenden statischen und dynamischen Kräften ausreichend Rechnung zu tragen. Hinzu kommt, dass auch die für die Schraubverbindung verwendeten Schrauben, Gewinde und ggf. Muttern verhältnismäßig schnell korrodieren und verschleißen und dementsprechend nur schwer zu demontieren sind, wenn die Ventilscheibe ausgewechselt oder ausgetauscht werden soll. Dementsprechend ist der Ersatz oder Austausch einer mit der Haltevorrichtung verschraubten Ventilscheibe meistens sehr langwierig und arbeitsaufwändig und oft sogar unmöglich.

Es ist deshalb Aufgabe der Erfindung, die Ventilklappe der eingangs genannten Art dahingehend weiterzubilden, dass der Ersatz oder Austausch der Ventilscheibe erheblich vereinfacht wird, ohne die Funktionsfähigkeit der Ventilklappe zu beeinträchtigen.

Zur Lösung dieser Aufgabe schlägt die Erfindung ausgehend von der Ventilklappe der eingangs genannten Art vor, dass die Verbindung zwischen der Ventilscheibe und der Tragvorrichtung als Bajonettverschluss ausgebildet ist.

Unter einem Bajonettverschluss wird hier eine besonders schnell herstellbare und lösbare mechanische Verbindung von zwei gegeneinander verdrehbaren Teilen verstanden, die zunächst durch axiales Verschieben in Richtung der Drehachse ineinander gesteckt werden und anschließend durch Verdrehen um die Drehachse formschlüssig gegeneinander verriegelt werden.

Solche Bajonettverschlüsse sind im Armaturenbau bisher lediglich für die Verbindung von rohrförmigen Gehäusestücken bekannt, wobei die gemeinsame Rohrachse der rohrförmigen Gehäusestücke mit der Drehachse des Bajonettverschlusses zusammenfällt (vgl. DE 602 00 016 T2 oder DE 10 2011 114 573 B4). Zur lösbaren Fixierung einer auswechselbaren Klappenscheibe an deren Tragvorrichtung sind demgegenüber solche Bajonettverschlüsse noch nicht zum Einsatz gekommen.

Ein besonders bevorzugtes Ausführungsbeispiel der Erfindung sieht vor,
- dass der Bajonettverschluss mindestens zwei kreisringsektorförmige Taschen aufweist, die mit Abstand zueinander entlang einer Kreislinie an der Rückseite der Ventilscheibe angeordnet sind und in Richtung auf eine durch den Mittelpunkt der Kreislinie und senkrecht zu Ebene der Ventilscheibe verlaufende Drehachse sowie in Umfangsrichtung der Kreislinie offen sind,
- und dass die Tragvorrichtung an ihrem Außenumfang mit Vorsprüngen versehen ist, die derart angeordnet und ausgebildet sind, dass sie zunächst durch Verschieben der Tragvorrichtung in Richtung der Drehachse zwischen die Taschen der Ventilscheibe einschiebbar sind und anschließend durch Verdrehen der Tragvorrichtung relativ zu der Ventilscheibe um die Drehachse formschlüssig in die kreisringsektorförmigen Taschen eingreifen.

Ein derartig ausgebildeter Bajonettverschluss zwischen Ventilscheibe und Tragvorrichtung hat sich als besonders robust erwiesen und ist bei der Montage und Demontage der Ventilscheibe außerordentlich einfach handhabbar. Zur Unterstützung der zur Montage und Demontage der Ventilplatte erforderlichen relativen Drehbewegung zwischen Ventilplatte und Tragvorrichtung können ohne weiteres entsprechend ausgebildete, zum Beispiel hydraulisch oder durch Druckluft angetriebene Hilfsvorrichtungen verwendet werden.

Alternativ zum vorstehend erläuterten Ausführungsbeispiel können - gewissermaßen in kinematischer Umkehr - die Funktionsteile des Bajonettverschlusses an Ventilscheibe und Tragvorrichtung auch gegeneinander ausgetauscht werden, indem die Taschen an der Haltevorrichtung und die in die Taschen eingreifenden Vorsprünge an der Ventilscheibe vorgesehen werden.

Um bei fertig montierter Ventilscheibe unbeabsichtigte Drehbewegungen zwischen der Ventilscheibe und der Tragvorrichtung mit Sicherheit auszuschließen, ist weiterhin vorgesehen, dass mindestens einer der kreisringsektorförmigen Taschen eine Verdrehsicherung zugeordnet ist, die in der Montagestellung durch Formschluss ein Verdrehen der Tragvorrichtung relativ zur Ventilscheibe verhindert.

Diese Verdrehsicherung weist Ausnehmungen auf, die sich in der Wandung einer Tasche der Ventilscheibe und dem dieser Tasche zugeordneten Vorsprung der Tragvorrichtung befinden, in der Montagestellung miteinander fluchten und ein in beide Ausnehmungen formschlüssig eingreifendes Verriegelungselement aufnehmen, welches durch Formschluss Verdrehbewegungen zwischen Ventilscheibe und Tragvorrichtung blockiert. Eine solche Verdrehsicherung ist besonders einfach aufgebaut und leicht zu montieren und zu demontieren, stellt aber zuverlässig sicher, dass sich die Ventilscheibe nicht zur Unzeit von der Tragvorrichtung löst.

Um weiterhin sicherzustellen, dass das Verriegelungselement aus den oben erwähnten Ausnehmungen herausfällt oder sich durch Verschmutzung oder Korrosion derart festsetzt, dass die Demontage erschwert wird, ist vorgesehen, dass das Verriegelungselement gegen Herausfallen durch einen mit Federklammer an der Haltevorrichtung festlegbaren Schutzdeckel gesichert ist.

Um bei der Montage einer Ventilscheibe an der Tragvorrichtung das passgerechte Zusammenführen der Teile des Bajonettverschlusses zu erleichtern, ist schließlich noch vorgesehen, dass die Ventilscheibe an ihrer der Tragvorrichtung zugewandten Seite einen zylindrischen Vorsprung aufweist, dessen Achse mit der Drehachse des Bajonettverschlusses zusammenfällt und der beim Zusammenfügen von Ventilscheibe und Tragvorrichtung in eine passende zylindrische Ausnehmung der Tragvorrichtung eingreift.

Ein Ausführungsbeispiel der Erfindung wird im Folgenden anhand der beigefügten Zeichnung näher erläutert. Es zeigen:
- Figur 1:: perspektivisch in Explosionsdarstellung die Teile einer Ventilklappe gemäß der Erfindung;
- Figur 2:: perspektivisch die Rückseite der Ventilscheibe der Ventilklappe gemäß der Erfindung;
- Figur 3:: perspektivisch eine Ansicht der Haltevorrichtung der Ventilklappe gemäß der Erfindung;

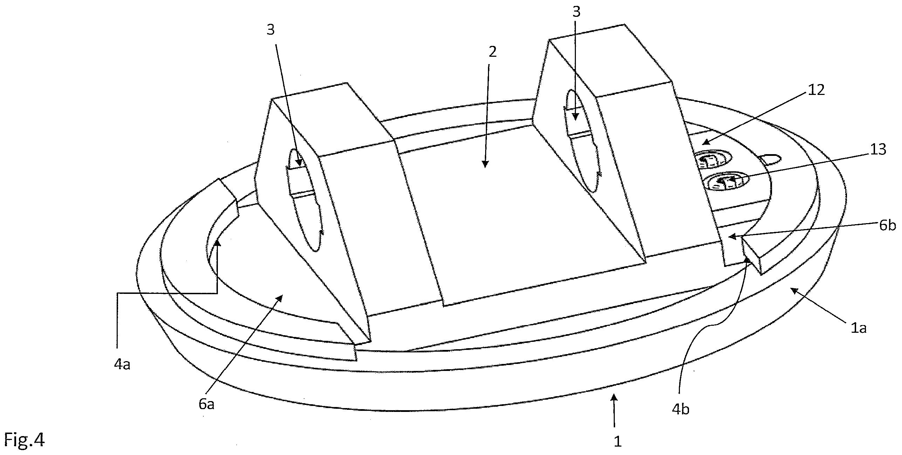

- Figur 4:: perspektivisch die Ventilklappe gemäß Erfindung im fertigmontierten Zustand;

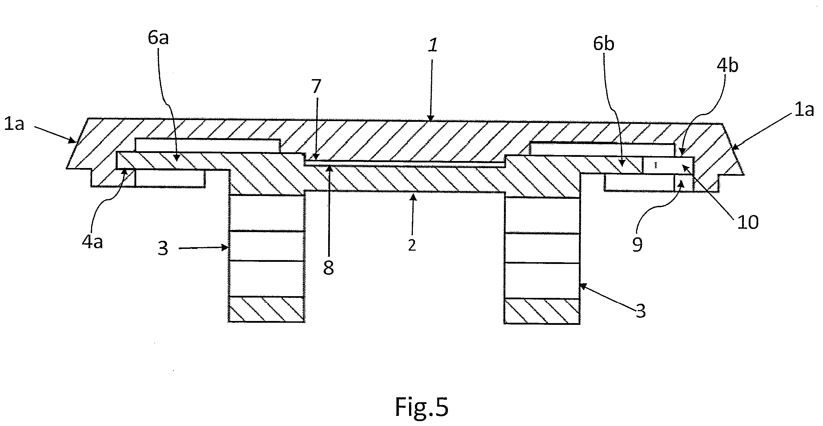

- Figur 5:: perspektivisch einen Schnitt durch die in Figur 4 dargestellte Ventilklappe im fertigmontierten Zustand.

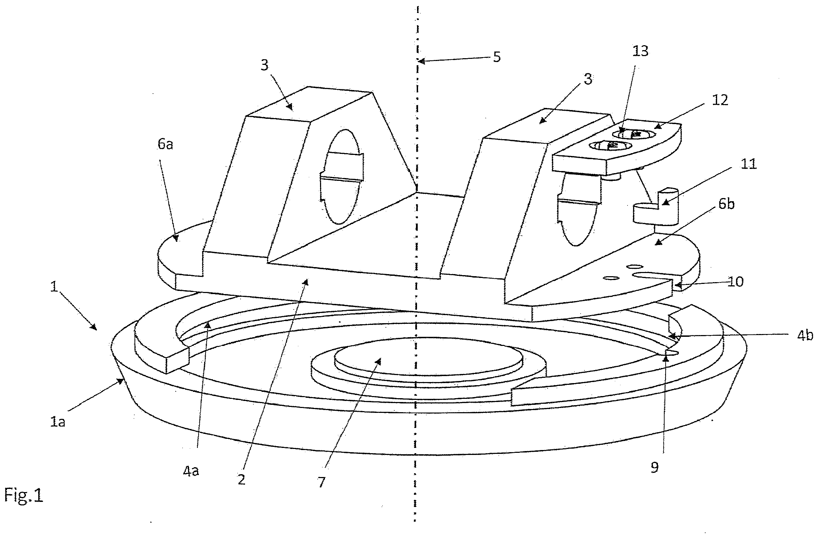

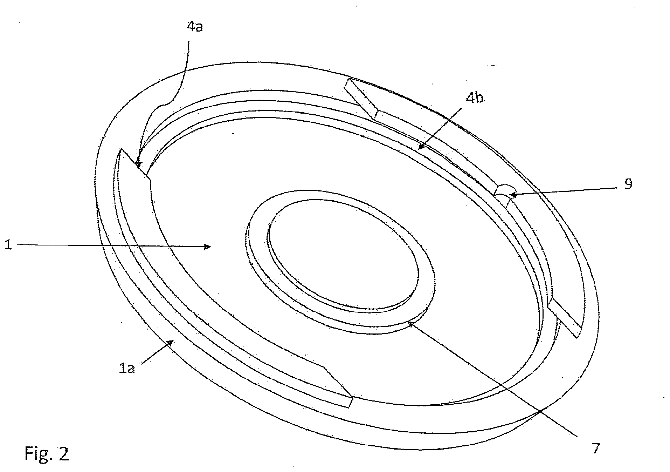

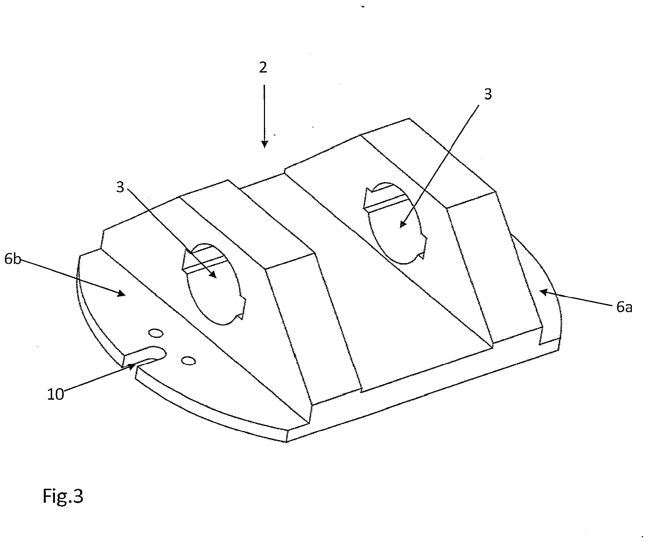

In der Zeichnung ist die kreisrund ausgebildete Ventilscheibe einer Ventilklappe gemäß der Erfindung mit dem Bezugszeichen 1 bezeichnet. Diese Ventilscheibe 1 (vgl. Fig. 1 und 2) weist an ihrem äußeren Umfang einen Dichtrand 1a auf, der zur Anlage an einem den Durchtrittquerschnitt eines nicht dargestellten Klappenventiles umgebenden Dichtsitz (ebenfalls nicht dargestellt.) dient. Diese Klappenscheibe 1 ist lösbar mit einer Tragvorrichtung verbunden, die in ihrer Gesamtheit mit dem Bezugszeichen 2 (vgl. Fig.3) bezeichnet ist und an ihrer Rückseite mit zwei Klappenaugen 3 versehen ist, die zur drehfesten Montage der Ventilklappe auf einer die Ventilklappe verschwenkenden Klappenwelle (nicht dargestellt) dienen.

Für die lösbare Verbindung zwischen der Klappenscheibe 1 und der Tragvorrichtung 2 ist die Klappenscheibe 1 an ihrer Rückseite mit zwei einander diametral gegenüberliegenden, kreisringsegmentförmig ausgebildeten Taschen 4a und 4b versehen, die in Umfangsrichtung mit Abstand zueinander und zum Außenumfang der Klappenscheibe 1 entlang einer Kreislinie angeordnet sind und in Richtung auf eine durch den Mittelpunkt dieser Kreislinie und senkrecht zur Ebene der Ventilscheibe 1 verlaufende Drehachse 5 (in Figur 1 in strichpunktierter Linie dargestellt) sowie in Umfangsrichtung der Kreislinie offen sind.

Weiterhin sind für die lösbare Verbindung zwischen der Klappenscheibe 1 und der Tragvorrichtung 2 am Außenumfang der Tragvorrichtung 2 zwei einander diametral gegenüberliegende Vorsprünge 6a und 6b vorgesehen, die so angeordnet, bemessen und ausgestaltet sind, dass sie in Umfangsrichtung passgenau in die kreisringsegmentförmigen Taschen 4a und 4b der Ventilscheibe 1 eingeschoben werden können, und zwar durch eine entsprechende Verdrehung der Tragvorrichtung 2 relativ zur Ventilscheibe 1 um die senkrecht zur Ebene der Ventilscheibe 1 verlaufende Drehachse 5.

Wesentlich ist weiterhin, dass die in Umfangsrichtung gemessenen Abstände zwischen den Taschen 4a und 4b der Klappenscheibe 1 und die in Umfangsrichtung gemessenen Längen der Vorsprünge 6a und 6b der Tragvorrichtung 2 derart aufeinander abgestimmt sind, dass in einem ersten Schritt durch eine axiale Verschiebung von Klappenscheibe 1 und Tragvorrichtung 2 in Richtung der Drehachse 5 die Vorsprünge 6a und 6b der Tragvorrichtung 2 in die Lücken zwischen den Taschen 4a und 4b der Ventilscheibe 1 geschoben werden können, um anschließend durch Verdrehen der Tragvorrichtung 2 relativ zur Ventilscheibe 1 um die Drehachse 5 in die Taschen 4a und 4b der Ventilscheibe 1 eingeschoben werden zu können.

Um die zuletzt erläuterte axiale Verschiebung und den sich anschließenden Verdrehvorgang zu präzisieren, ist weiterhin vorgesehen, dass die Ventilscheibe 1 an ihrer der Tragvorrichtung 2 zugewandten Seite einen zylindrischen Vorsprung 7 aufweist, dessen Achse mit der Drehachse 5 zusammenfällt und der beim Zusammenfügen von Ventilscheibe 1 und Tragvorrichtung 2 in eine passende zylindrische Ausnehmung 8 der Tragvorrichtung 2 eingreift.

Um in der Montagestellung ungewollte Verdrehungen zwischen der Ventilscheibe 1 und der Tragvorrichtung 2 zu vermeiden, ist im Bereich der Tasche 4b eine Verdrehsicherung angeordnet, die durch Formschluss solche Verdrehungen verhindert. Hierzu sind in der Wandung der Tasche 4b der Ventilscheibe 1 und dem zugeordneten Vorsprung 6b der Tragvorrichtung 2 Ausnehmungen 9 und 10 vorgesehen, die bei Montagestellung von Ventilscheibe 1 und Tragvorrichtung 2 miteinander fluchten und in die ein formschlüssig eingreifendes Verriegelungselement 11 einschiebbar ist, welches durch Formschluss etwaige Drehbewegungen zwischen Ventilscheibe 1 und Tragvorrichtung 2 blockiert.

Um zu vermeiden, dass das Verriegelungselement 11 bei der Verwendung der Ventilklappe gemäß der Erfindung in einer Absperrarmatur aus den Ausnehmungen 9 und 10 herausfällt oder durch Verschmutzung und Korrosion in diesen Ausnehmungen unlösbar blockiert wird, ist weiterhin ein die Verdrehsicherung 9,10 und 11 abdeckender Schutzdeckel 12 vorgesehen, der mithilfe von Federklammern 13 an der Tragvorrichtung 2 festlegbar ist.

## Patentansprüche

1. Ventilklappe für ein Klappenventil, mit einer den Durchtrittsquerschnitt des Klappenventils abdeckenden Ventilscheibe (1), die an ihrem äußeren Umfang mit einem Dichtrand (1a) für die Anlage an einem den Durchtrittsquerschnitt des Klappenventils umgebenden Dichtsitz versehen ist und an ihrer Rückseite mit einer Tragvorrichtung (2) versehen ist, die mittels eines oder mehrerer Klappenaugen (3) drehfest an einer die Ventilklappe verschwenkenden Klappenwelle festlegbar ist und lösbar mit der Ventilscheibe (1) verbunden ist, **dadurch gekennzeichnet,**
**dass** die Verbindung zwischen der Ventilscheibe (1) und der Tragvorrichtung (2) als Bajonettverschluss ausgebildet ist.

2. Ventilklappe nach Patentanspruch 1, **dadurch gekennzeichnet,**
- **dass** der Bajonettverschluss mindestens zwei kreisringsektorförmige Taschen (4a, 4b) aufweist, die mit Abstand zueinander entlang einer Kreislinie an der Rückseite der Ventilscheibe (1) angeordnet sind und in Richtung auf eine durch den Mittelpunkt der Kreislinie und senkrecht zu Ebene der Ventilscheibe (1) verlaufende Drehachse (5) sowie in Umfangsrichtung der Kreislinie offen sind,
- und **dass** die Tragvorrichtung (2) an ihrem Außenumfang mit Vorsprüngen (6a, 6b) versehen ist, die derart angeordnet und ausgebildet sind, dass sie zunächst durch axiales Verschieben der Tragvorrichtung (2) in Richtung der Drehachse (5) zwischen die Taschen (4a, 4b) der Ventilscheibe (1) einschiebbar sind und anschließend durch Verdrehen der Tragvorrichtung (2) relativ zu der Ventilscheibe (1) um die Drehachse (5) formschlüssig in die kreisringsektorförmigen Taschen (4a, 4b) eingreifen.

3. Ventilklappe nach den Patentansprüchen 1 und 2, **dadurch gekennzeichnet, dass** mindestens einer der kreisringsektorförmigen Taschen (4a, 4b) eine Verdrehsicherung (9, 10,11) zugeordnet ist, die in der Montagestellung durch Formschluss ein Verdrehen der Tragvorrichtung (2) relativ zur Ventilscheibe (1) verhindert.

4. Ventilklappe nach Patentanspruch 3, **dadurch gekennzeichnet, dass** die Verdrehsicherung (9, 10,11) Ausnehmungen (9,10) aufweist, die sich in der Wandung einer Tasche (4b) der Ventilscheibe (1) und dem dieser Tasche (4b) zugeordneten Vorsprung (6b) der Tragvorrichtung (2) befinden, in der Montagestellung miteinander fluchten und ein in beide Ausnehmungen (9,10) formschlüssig eingreifendes Verriegelungselement (11) aufnehmen, welches durch Formschluss Verdrehbewegungen zwischen Ventilscheibe (1) und Tragvorrichtung (2) blockiert.

5. Ventilklappe nach Patentanspruch 4, **dadurch gekennzeichnet, dass** das Verriegelungselement (11) gegen Herausfallen oder Verschmutzung durch einen mit Federklammern (13) an der Haltevorrichtung (2) festlegbaren Schutzdeckel (12) gesichert ist.

6. Ventilklappe nach einem oder mehreren der Patentansprüche 2 bis 5, **dadurch gekennzeichnet, dass** die Ventilscheibe (1) an ihrer der Tragvorrichtung (2) zugewandten Seite einen zylindrischen Vorsprung (7) aufweist, dessen Achse mit der Drehachse (5) zusammenfällt und der beim Zusammenfügen von Ventilscheibe (1) und Tragvorrichtung (2) in eine passende zylindrische Ausnehmung (8) der Tragvorrichtung (2) eingreift.
